Europäisches Patentamt

**European Patent Office**

**Office européen des brevets**

(19)

(11) Publication number: **0 015 693**
A1

(12)

# EUROPEAN PATENT APPLICATION

(21) Application number: **80300529.7**

(22) Date of filing: **22.02.80**

(51) Int. Cl.³: **B 21 K 1/46,** B 23 P 17/00

(30) Priority: **28.02.79 GB 7907153**

(71) Applicant: **STEVENS & BULLIVANT Limited, Western Road Spring Hill, Birmingham B18 7QE (GB)**

(72) Inventor: **Thompson, Alfred James, 47 Vernon Avenue, Handsworthwood Birmingham B20 (GB)**

(74) Representative: **Collingwood, Anthony Robert et al, LEWIS W. GOOLD & CO. Whitehall Chambers 23 Colmore Row, Birmingham B3 2BL (GB)**

(43) Date of publication of application: **17.09.80 Bulletin 80/19**

(84) Designated Contracting States: **BE DE FR IT NL SE**

(54) **Manufacture of track rod ends.**

(57) A track rod end having a head portion (12) an a stem portion (14) is initially produced as a drop forged blank such that the length of the stem portion is less than the desired length in the finished article and the diameter of the stem portion (14) is greater than the desired finished diameter. The drop forge blank is then subjected to a hydraulic forming operation which causes elongation of the stem portion (14) to the desired length and reduction of its diameter to the desired diameter. Thereafter, the head (12) may be machined to the desired configuration and the stem portion (14) may be provided with a screwthread by means of the thread rolling technique. This method reduces the amount of material required for the production of a track rod end, the extrusion step and hence the mechanical working of the stem portion (14) increases its tensile strength and the cylindrically formed stem portion (14) created by extrusion facilitates mounting of the track rod end for subsequent machining of the head (12).

1.

DESCRIPTION

MANUFACTURE OF TRACK ROD ENDS

This invention relates to the manufacture of track rod ends for motor vehicle steering systems.

Track rod ends are conventionally manufactured by initially producing a drop forged blank comprising a head portion and a stem portion, the head portion is machined to form a generally cylindrical section recess for reception of a ball joint coupling and thereafter the stem is machined to a cylindrical form in which a screw thread is then machined. The head portion is machined before the stem portion so that the machined recess can be used to mount the rod end for subsequent machining of the stem.

The object of the present invention are to enable track rod ends to be manufactured more efficiently and economically.

According to the present invention we provide a method of manufacturing a track rod end having a head portion and a stem portion, the stem portion having a predetermined length and a generally cylindrical portion of predetermined dimension, said method including the steps of producing a blank having a head portion and a stem portion whose length is shorter than said predetermined length and whose cross-sectional dimension is larger than said predetermined dimension, and subjecting the stem portion to a mechanical working operation which reduces the cross section of the stem to generally cylindrical form of said predetermined dimension while elongating the same to said predetermined length.

Thus instead of removing the material from the stem portion in order to reduce it to the required size, in accordance with the present invention the stem portion can be mechanically reduced to the required size without removal of material by machining and at the same time it is elongated to the required size as a result of the reducing operation. A considerable saving in the quantity of material used for the manufacture of the track rod end is therefore possible. Moreover, by mechanically working the stem portion to reduce its cross-section without removing material, the tensile strength of the material is increased.

Preferably the mechanical reducing stroke elongation step is carried out prior to machining of the head. Thus, the track rod ends may be mounted and properly located by means of their cylindrical stem portions during this machining step and this can be accomplished more easily than is the case when the head portion is used to mount and locate the track rod end. Using the stem portion to mount and locate the rod end is not practical with the conventional method because the screw thread forming step is carried out immediately after the stem portion has been machined to cylindrical form and the screw thread could be damaged if the stem portion is subsequently used to mount the rod end during machining of the head portion.

In accordance with the preferred feature of the invention, the screw thread is formed on the cylindrical stem portion by the thread rolling technique.

The reducing elongation step is preferably carried out by forcing the stem portion of each track rod end into a die having said predetermined cross sectional dimension so that the stem portion is not only reduced in cross section but also undergoes extrusion to a limited extent sufficient to achieve the desired finished length. The blank may be produced as a drop forging with a cross-sectional dimension which, when reduced to said predetermined dimension, will provide sufficient material for elongation of the stem portion to the desired extent.

In one preferred embodiment, the track rod ends are held stationary while the die is reciprocated length-wise thereof, preferably by means of a fluid powered ram. In practice, it has been found that only one stroke of a single die is necessary; however, if desired the reduction elongation step could be performed in stages using dies of progressively reducing cross-section.

It is envisaged that, when operated on a commercial scale, a plurality of drop forged blanks will be mounted stationary while a head carrying a corresponding plurality of dies will execute a reducing stroke, under the control of a hydraulic ram or rams so that each of the dies simultaneously engages a respective stem portion and reduces it cross-section while elongating the same during the working stroke.

In order to promote further understanding of the invention, reference is now made to the accompanying drawings in which:

Figure 1 is a perspective view of a drop forge blank for use in the production of a track rod
end;

Figure 2 is a similar view to that of Figure
1 but showing the forged blanks subsequent to reduction
stroke elongation of the stem portion thereof;
and

Figure 3 is a diagrammatic view illustrating
the method of effecting the reduction stroke elongation
of the stem portion.

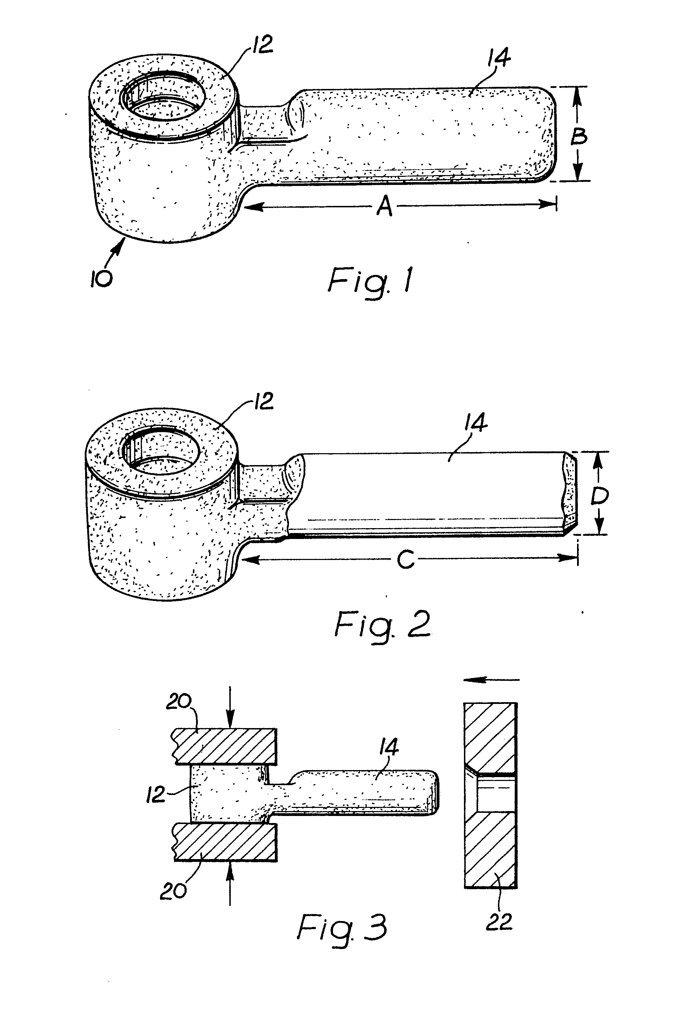

Referring now to the drawings, a drop forged
blank 10 is shown in Figure 1.  The blank comprises
a head 12 and a stem 14 of length A and diameter
B.  The blank of Figure 1 is similar to the blank
that would be formed in the manufacture of a conventional
track rod end except that the length of the stem
portion 14 is less than the desired length in the
finished article.

In order to elongate stem 14 and, at the same
time, reduce its diameter to the desired diameter,
the head 12 of the blank is clamped by means of
a suitable workpiece holder 20 with the stem 14
projecting forwardly.  A die 22 whose die opening
is of a diameter equal to the desired diameter
of the finished article, is forced along the stem
14 by means of a hydraulic ram (not shown) thereby
causing the stem 14 to undergo extrusion.  After
completion of the extrusion, the blank will be
of the form shown in Figure 2 where the stem 14
has been elongated to a dimension C (corresponding
to the desired length of the finished article)
and reduced in diameter to a diameter D (corresponding
to the desired diameter of the finished article).
It will be noted that during this step, the stem
14 is rendered truly cylindrical.

Subsequently to the extrusion step, the track rod end may be mounted by means of its stem to
enable the head 12 to be machined to a conventional
configuration and the stem can thereafter be provided
with a screwthread by thread rolling.  It will
be appreciated that a number of forged blanks are
subjected simultaneously to the extrusion step
by mounting a number of blanks in a suitable workpiece
holder and forcing a corresponding number of dies
along the length of their stems.

6.

CLAIMS

1. A method of manufacturing a track rod end having a head portion and a stem portion, the stem portion having a predetermined length and a generally cylindrical portion of predetermined dimension, said method including the steps of producing a blank having a head portion and a stem portion whose length is shorter than said predetermined length and whose cross-sectional dimension is larger than said predetermined dimension, and subjecting the stem portion to a mechanical working operation which reduces the cross section of the stem to generally cylindrical form of said predetermined dimension while elongating the same to said predetermined length.

2. A method as claimed in Claim 1 in which the mechanical reducing stroke elongation step is carried out prior to machining of the head.

3. A method as claimed in Claim 1 or 2 in which a screwthread is formed on the cylindrical stem portion by the thread rolling technique.

4. A method as claimed in any one of Claims 1 to 3 in which said reducing stroke elongation step is carried out by forcing the stem portion of each

7.

0015693

track rod end into a die having said predetermined
cross sectional dimension so that the stem portion
is not only reduced in cross section but also undergoes
extrusion.

5, A method as claimed in Claim 4 in which the
track rod ends are held stationary while the die
is reciprocated lengthwise thereof, for example
by means of a fluid powered ram.

6. A method as claimed in Claim 4 or 5 in which
said reduction stroke elongation step is performed
in stages using dies of progressively reducing
cross section.

7. A method of manufacturing a track rod end
substantially as hereinbefore described with reference
to, and as shown in, the accompanying drawings.

Fig. 1

Fig. 2

Fig. 3

## DOCUMENTS CONSIDERED TO BE RELEVANT

| Category | Citation of document with indication, where appropriate, of relevant passages | Relevant to claim |
|---|---|---|
| | US - A - 3 818 746 (FUJITA) <br> * claim 1 * <br> -- | 1 |
| A | DE - A - 2 042 971 (LEMFÖRDER METALLWAREN) <br> * complete document * <br> -- | |
| A | DE - U - 1 911 842 (HAMMER) <br> * complete document * <br> -- | |
| A | GB - A - 502 597 (MEYER) <br> * complete document * <br> ---- | |

**CLASSIFICATION OF THE APPLICATION (Int. Cl.3)**

B 21 K 1/46
B 23 P 17/00

**TECHNICAL FIELDS SEARCHED (Int.Cl.3)**

B 21 C 23/00
B 21 D 53/00
B 21 J 1/04
B 21 K 1/00
B 23 P 17/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| Berlin | 23-05-1980 | SCHLAITZ |